# EUROPEAN PATENT APPLICATION

(11) **EP 2 530 932 A2**
(43) Date of publication of application: **05.12.2012**
(21) Application number: 12169868.2
(22) Date of filing: 29.05.2012
(51) Int. Cl.: H04N 5/76, H04N 21/44, H04N 21/4147, H04N 21/845, H04N 21/4335, H04N 21/426

(54) **Assessment information gathering system**

(30) Priority: 30.05.2011 JP 2011120385
(71) Applicant: Kabushiki Kaisha Square Enix (also Trading As Square Enix Co. Ltd.), Tokyo 151-8544 (JP)
(72) Inventor: Shimada, Akinari, Tokyo 151-8544 (JP)
(74) Representative: Pitchford, James Edward

(57) **Abstract**

Provided is an assessment information gathering system capable of giving assessment on the content of a game with a simple operation in real-time when a player or a tester feels that the content of the game is "Good" or "Bad" during the playing of the game. Assessment information and operator guidance information input by the players of a plurality of game devices are transmitted to a server. Game progressing processing such as a virtual combat between a player character and an enemy character or the occurrence of an event is executed in the server in accordance with a prescribed program based on the transmitted operator guidance information. The results of the computation in the server are transmitted to the respective game devices. A game image obtained by perspective transformation of a virtual 3-dimensional space on a virtual screen is displayed on a display screen of the game device based on the transmitted computation results.

## Description

### BACKGROUND OF THE INVENTION

The present disclosure relates to subject matter contained in Japanese Patent Application No. 2011-120385, filed on May 30, 2011, the disclosure of which is expressly incorporated herein by reference in its entirety.

### 1. Field of the Invention

The present invention relates to an assessment information gathering system capable of giving assessment on game content with a simple operation in real-time, a server used in the system, and an aggregated result display system capable of aggregating information gathered by the assessment information gathering system and displaying the aggregated result thereof.

### 2. Description of Related Art

In the related art, a networked game in which a plurality of players can play the same game simultaneously using different game terminals via a communication network such as the Internet is provided. In the networked game, a plurality of players can progress the game while cooperating or competing with other players, and the plurality of players can play freely with their own intention.

In the networked game, a play log which is the history of the actions taken by the plurality of players is stored in a server, and the play log is used for extracting improper acts, correcting the content of the networked game, and developing new games. However, when only the history of the actions of players is stored, there is a problem in that it is difficult to understand what assessment the player has given such as whether the player felt the game interesting or boring at that time.

For example, a technique of designating the notice of hazard to a hazardous object observed by a player in a virtual world, aggregating the designations, and assigning the degree of hazard is proposed (for example, Japanese Patent Application Laid-Open (JP-A) No. 2009-233174). Moreover, a game system in which assessment information of the game content during reproduction of the game content is recorded in correlation with game reproduction data so that the feeling on the game content can be shared with other users even when a user is watching the reproduced game content is proposed (for example, Japanese Patent Application Laid-Open (JP-A) No. 2010-239991).

However, the invention disclosed in JP-A No. 2009-233174 is configured to aggregate the degree of hazard by the report of a player even when a malicious player is present, but is not configured to aggregate the feelings that the player has a good or bad feeling on the game content. Moreover, the invention disclosed in JP-A No. 2010-239991 is configured to input the feeling on the game content when the user is reproducing the game content, but is not configured to input assessment during playing of the game in real-time. As above, there is no system capable of allowing a player (including a tester that plays a trial game when developing a game) to input emotional assessment such as "Good" or "Bad" during playing of the game with a simple operation in real-time.

An object of an embodiment of the present invention is to provide an assessment information gathering system capable of giving assessment on the game content with a simple operation in real-time when a player or a tester feels that the game content is "Good" or "Bad" during the playing of the game. Another object of an embodiment of the present invention is to provide an assessment information gathering system capable of giving assessment on music or film content with a simple operation when a user watching the content feels that the content is "Good" or "Bad" when enjoying the content stored in a recording medium such as a CD or a DVD of the music or the film.

### SUMMARY OF THE INVENTION

The present invention relates to an assessment information gathering system which comprises a content reproducing device including an input device, and a server connectable to the content reproducing device via a communication network, and which gathers assessment information on assessment on content when reproducing content, wherein: the content reproducing device includes an assessment information receptor that accepts assessment information on assessment on content under reproduction in accordance with an input operation on the input device, of a user, and an information transmitter that transmits the assessment information accepted by the assessment information receptor and content information on content under reproduction at the time of accepting the assessment information to the server, and the server includes an information receiver that receives the assessment information and the content information from the content reproducing device, and an information storage that stores the assessment information and the content information received by the information receiver in correlation.

The user can give assessment on the content with a predetermined simple operation in real-time when the user feels that the content is "Good" or "Bad" when reproducing the content recorded in a recording medium such as a CD or a DVD of music or a film as well as a game with a content reproducing device. Moreover, since the assessment information is stored in correlation with the content, it is possible to gather the assessment information of the content in the game in a seamless manner.

In the present invention, it is preferable that the server transmits the assessment information and the content information to a web server in correlation based on the information stored in the information storage.

Since the information on the content as well as the assessment information input by the user reproducing the content of a game, a film, or music with a content reproducing device is transmitted to the web server, it is possible to display the input assessment information to the page of a social networking system (SNS) or a blog managed by the user. Moreover, it is possible to display the content itself corresponding to the assessment information. Thus, a viewer viewing the SNS or the blog can understand the content and the corresponding assessment input by the user.

In the present invention, it is preferable that the server includes a synchronization controller that controls so that the reception of the information by the information receiver and the transmission of the information to the web server by the information transmitter are performed synchronously.

Since the information on the content as well as the assessment information input by the user reproducing the content of a game, a film, or music with a content reproducing device are transmitted to the web server, and the reception of the assessment information and the content information in the server and the transmission to the web server are performed synchronously, the viewer viewing the SNS or the blog can understand the content and the corresponding assessment input by the user in real-time.

The present invention also relates to an assessment information gathering system which includes a game device including an input device and a server connectable to the game device via a communication network, and which gathers assessment information on assessment on the content of a game in a networked game where the game progresses in accordance with an input operation on the input device, of a player, wherein: the game device includes an assessment information receptor that accepts the assessment information on the assessment on the content of the game by the player in accordance with the input operation on the input device, of the player, an operator guidance information receptor that accepts operator guidance information on an operator guidance for progressing the game in accordance with the input operation on the input device, of the player, and an information transmitter that transmits the assessment information and the operator guidance information to the server, and the server includes an information receiver that receives the assessment information and the operator guidance information from the game device, a game progressor that progresses the game based on the operator guidance information received by the information receiver, and an information storage that stores the assessment information received by the information receiver in correlation with the operator guidance information and/or game progress status information on a progress status of the game progressed by the game progressor.

It is possible to give assessment on the game with a predetermined simple operation in real-time when a player or a tester feels that the game is "Good" or "Bad" during the playing of the game. Moreover, in a play mode where the game is progressed with the player's operation or in a movie mode where a predetermined animation is automatically displayed in line with the storyline of the game regardless of the player's operation, since the assessment information is stored in correlation with the content, it is possible to gather the assessment information on the content in the game in a seamless manner.

In the present invention, it is preferable that the server includes an assessment information storage that stores the assessment information and assessment information received time when the assessment information is received by the server in correlation, and an operator guidance information storage that stores the operator guidance information and operator guidance information received time when the operator guidance information is received by the server in correlation, and wherein the information storage stores the assessment information corresponding to the assessment information received time based on the assessment information received time and the operator guidance information received time in correlation with the operator guidance information corresponding to the operator guidance information received time.

Since the information on the assessment on the game is stored in correlation with the time when the assessment information was input, and the operator guidance information input substantially at the same time as the assessment information is specified, it is possible to specify an operator guidance corresponding to the assessment information and correlate the assessment information and the operator guidance information. For example, when a certain player fails to input an operation, and a player belonging to the same party as the player inputs "Bad Assessment," it is possible to correlate these two events.

In the present invention, it is preferable that the server includes the assessment information storage that stores the assessment information in correlation with the assessment information received time when the assessment information is received by the server, and a game progress status information storage that stores the game progress status information in correlation with time corresponding to a game progress status, and wherein the information storage stores the assessment information corresponding to the assessment information received time based on the assessment information received time and the time in correlation with the game progress status information corresponding to the time.

Since the information on the assessment on the game is stored in correlation with the time when the assessment information was input, and the game progress status information input substantially at the same time as the assessment information is specified, it is possible to specify the game progress status corresponding to the assessment information and correlate the assessment information and the game progress status information. For example, when a player character knocks down an enemy character to acquire a useful and valuable item, and the player character input "Good Assessment" in relation to this event, it is possible to correlate these two events. Moreover, in a virtual combat between the enemy character and the player character, when the player character receives severe damage from the enemy character, and the player character inputs "Bad Assessment" in relation to this event, it is possible to correlate these two events.

In the present invention, it is preferable that the input device includes a plurality of operating buttons, and the input operation of the assessment information by the assessment information receptor is executed by pressing of one of the operating buttons.

For example, among the plurality of operating buttons of the input device, "Good button" is allocated to a specific single operating button, and "Bad button" is allocated to another operating button different from the above operating button. When the "Good button" is pressed, "Good Assessment" which is desirable assessment is given to the content of the game in progress. When the "Bad button" is pressed, "Bad Assessment" which is undesirable assessment is given to the content. When one of the "Good button" and the "Bad button" is pressed, the assessment information is transmitted to the server and stored on the server. As above, the player can give assessment on the content of the game in real-time by a simple operation of just pressing one operating button.

In the present invention, it is preferable that the server includes an assessment information classifier that classifies the assessment information stored in the information storage in accordance with the content of the correlated operator guidance information and/or the correlated game progress status information, and an assessment information aggregator that aggregates the number of classified assessment information for each piece of operator guidance information and/or each piece of game progress status information.

The assessment on the game content input by the player can be classified for each of the content of the operator guidance information and the game progress status information and aggregated, and the obtained analysis result can be fed back to the game developer. For example, in the case of a role-playing game (RPG) in which a player character is grown by performing a combat with an enemy character to acquire an experience point, it is possible to understand which area in the field within a virtual space has high popularity to the player. Moreover, when the player character attacks the enemy character, it is possible to understand which attack has high popularity to the player. Content which gained high ratings from many players may be aggressively advertized to other players, and content gained low ratings may be improved.

In the present invention, it is preferable that the server includes an attribute storage that stores player attribute information on an attribute of the player and/or player-character attribute information on a player character operated by the player, and wherein the assessment information aggregator aggregates the assessment information for each piece of player attribute information and/or each piece of player-character attribute information stored in the attribute storage.

Moreover, by comparing the attribute such as an age, a sex, and a job of the player with the assessment on the game content, it is possible to clearly understand a difference in preference depending on the player's attribute. Moreover, the attribute of the player character may be compared with the assessment on the game content. For example, in the case of a game in which a player freely creates a player character to be operated by the player at the time of starting the game, the result of the assessment on the content in the game may be different depending on an attribute such as the tribe that determines the tendency of a fundamental status such as the physical or magical power of the player character, an item equipped to the player character, or a job that determines the tendency of selectable special attacks or magic.

The present invention relates to a server which is connected to a game device including an input device via a communication network, and which gathers assessment information on assessment on the content of a game in a networked game in which the game progresses in accordance with an input operation on the input device, of a player, comprising: an assessment information receptor that accepts the assessment information on the assessment on the content of the game by the player, input to the game device in accordance with the input operation on the input device, of the player; an operator guidance information receiver that receives operator guidance information on an operator guidance for progressing the game, input to the game device in accordance with the input operation on the input device, of the player from the game device; a game progressor that progresses the game based on the operator guidance information received by the operator guidance information receiver; and an information storage that stores the assessment information received by the assessment information receptor in correlation with the operator guidance information and/or game progress status information on a progress status of the game progressed by the game progressor.

The present invention also relates to an aggregated result display system comprising: a game device including an input device; a server which is connected to the game device via a communication network, and which gathers assessment information on assessment on the content of a game in a networked game in which the game progresses in accordance with an input operation on the input device, of a player and aggregates the assessment information for each player; a web server which is connected to the server via the communication network, and which receives an aggregated result of the assessment information from the server; and a client terminal which is connected to the web server via the communication network, which can access the web server to display a predetermined website, and which includes a display device, wherein: the game device includes an assessment information receptor that accepts the assessment information on the assessment on the content of the game by the player in accordance with the input operation on the input device, of the player, an operator guidance information receptor that accepts operator guidance information on an operator guidance for progressing the game in accordance with the input operation on the input device, of the player, and an information transmitter that transmits the assessment information and the operator guidance information to the server, the server includes an information receiver that receives the assessment information and the operator guidance information from the game device, a game progressor that progresses the game based on the operator guidance information received by the information receiver, an information storage that stores the assessment information received by the information receiver in correlation with the operator guidance information and/or game progress status information on a progress status of the game progressed by the game progressor, an assessment information classifier that classifies the assessment information stored in the information storage in accordance with the content of the correlated operator guidance information and/ or the correlated game progress status information, an assessment information aggregator that aggregates the number of classified assessment information for each player and each piece of operator guidance information and/or each piece of game progress status information, a player identification information receiver that receives player identification information from a web server, an aggregated result specifier that specifies an aggregated result by the assessment information aggregator in relation to the player identified by the player identification information received by the player identification information receiver, and an aggregated result transmitter that transmits the aggregated result specified by the aggregated result specifier to the web server, the client terminal includes a requestor to send that requests transmission of display information to the web server, a display information receiver that receives the display information from the web server, and a website displayer that displays a website on a display screen based on the display information received by the display information receiver, and the web server includes a request to send receptor that accepts the request to transmit the display information from the client terminal, a player identification information transmitter that transmits information for identifying a player, of which the aggregated result of the assessment information is to be displayed, in accordance with a prescribed program when the request to send receptor accepts the request to transmit the display information to the web server from the client terminal, an aggregated result receiver that receives the aggregated result from the server, a display information generator that generates the display information to be transmitted to the client terminal based on the aggregated result received by the aggregated result receiver, and a transmitter that transmits the display information generated by the display information generator to the client terminal.

The assessment information input when the player plays a game can be displayed on the page of the SNS or the blog managed by the player. When a viewer accesses the page of the SNS or the blog of the player, an aggregated result transmission request is transmitted from the web server to the server in which the assessment information is aggregated and stored, and the aggregated result is transmitted to the web server. Moreover, when the web server transmits display information for displaying the aggregated result to the client terminal, the viewer can view the aggregated result of the assessment information via a browser.

### BRIEF DESCRIPTION OF THE DRAWINGS

Fig. 1 is an example of a block diagram illustrating a configuration of a networked game system according to an embodiment of the present invention;
Fig. 2 is an example of a block diagram illustrating a configuration of a game device according to an embodiment of the present invention;
Fig. 3 is an example of a diagram illustrating an appearance of a controller provided to the game device according to the embodiment of the present invention;
Fig. 4 is an example of a block diagram illustrating a configuration of a server according to an embodiment of the present invention;
Fig. 5 is an example of a flowchart of play-log storage processing in an assessment information gathering system according to an embodiment of the present invention;
Fig. 6 is an example of a flowchart of assessment information storage processing in the assessment information gathering system according to the embodiment of the present invention;
Fig. 7 is an example of a diagram illustrating an example of a display screen of the game device according to the embodiment of the present invention;
Fig. 8 is an example of a conceptual diagram of a play log according to an embodiment of the present invention;
Fig. 9 is an example of a flowchart of analysis processing in a server according to an embodiment of the present invention;
Fig. 10 is an example of a diagram illustrating an example of an assessment information table according to an embodiment of the present invention;
Fig. 11 is an example of a flowchart of aggregated result display processing in an aggregated result display system according to an embodiment of the present invention;
Fig. 12 is an example of a diagram illustrating an example of My Page of a social networking service according to an embodiment of the present invention;
Fig. 13 is an example of a flowchart of assessment information storage processing according to an embodiment of the present invention; and
Fig. 14 is an example of a conceptual diagram illustrating correspondence between a field map within a virtual space in which a player character can move and a game progress status ID in an embodiment of the present invention.

### DETAILED DESCRIPTION OF EMBODIMENTS

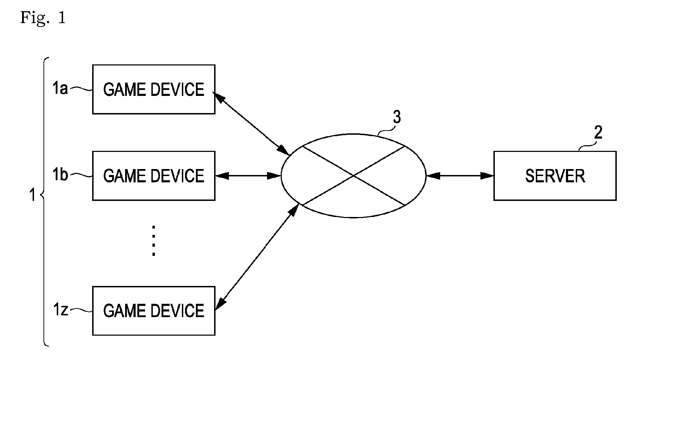

Hereinafter, an embodiment of the present invention will be described with reference to the accompanying drawings. Fig. 1 is an example of a block diagram illustrating a configuration of a networked game system according to an embodiment of the present invention. As illustrated in Fig. 1, the networked game system includes a plurality of game devices 1 (game devices 1a, 1b, ···, and 1z) operated by a plurality of players (players A, B, ···, and Z), a server 2, and a communication network 3. The game device 1 is connected to the server 2 via the communication network 3. The game device 1 may not be always connected to the server 2 but may be connectable to the server 2 as necessary.

Assessment information and operator guidance information input by the players using the plurality of game devices 1 are transmitted to the server 2. Based on the transmitted operator guidance information, game progressing processing such as a virtual combat between a player character and an enemy character controlled by a control section or the occurrence of an event is executed in the server 2 in accordance with a prescribed program. The result of the computation in the server 2 is transmitted to the respective game devices 1. Based on the transmitted computation result, a game image obtained by perspective transformation of a virtual 3-dimensional space on a virtual screen within the game device 1 is displayed on a display screen of each of the game devices 1.

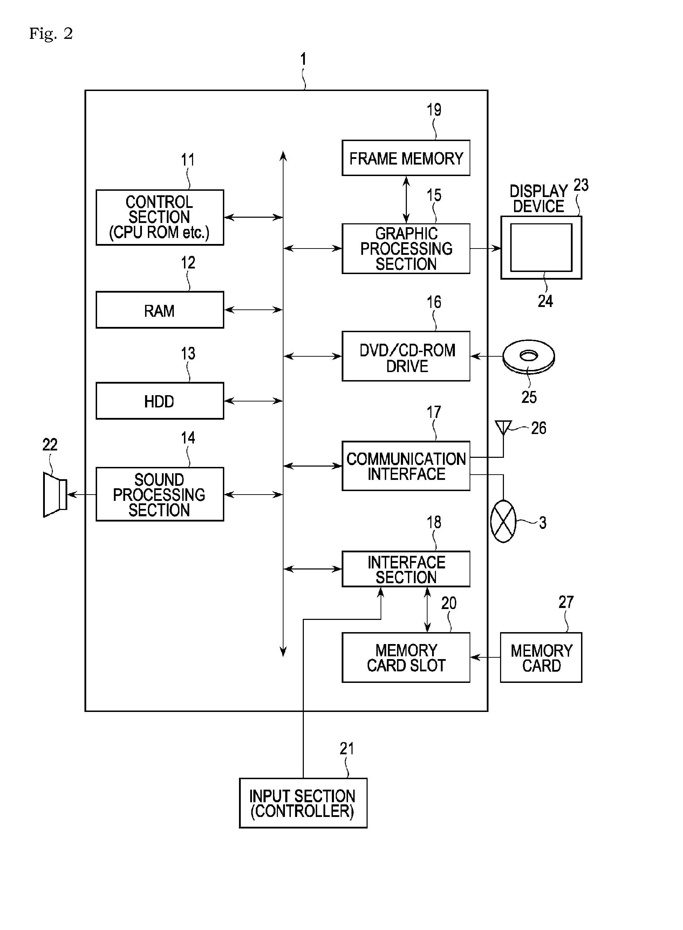

Fig. 2 is an example of a block diagram illustrating a configuration of a game device according to an embodiment of the present invention. The game device 1 includes a control section 11, a random access memory (RAM) 12, a hard disk drive (HDD) 13, a sound processing section 14, a graphic processing section 15, a DVD/CD-ROM drive 16, a communication interface 17, and an interface section 18, which are connected to each other by an internal bus.

The control section 11 includes a central processing unit (CPU) and read only memory (ROM). The control section 11 executes programs stored in the HDD 13 or a recording medium 25 and controls the game device 1. Moreover, the control section 11 includes an internal timer for measuring time. The RAM 12 is a work area of the control section 11. The HDD 13 is a storage area for storing programs and data.

The DVD/CD-ROM drive 16 can mount a recording medium 25 storing a game program, such as a DVD-ROM or a CD-ROM. The recording medium 25 stores programs and data for performing a game. By the DVD/CD-ROM drive 16, the programs and data necessary for the progress of a game are read from the recording medium 25 and loaded to the RAM 12.

The control section 11 performs the reading of the programs and data necessary for the progress of the game from the RAM 12. The control section 11 processes the programs and data loaded to the RAM 12 to thereby output a sound output instruction to the sound processing section 14 and output a rendering command to the graphic processing section 15.

The sound processing section 14 is connected to a sound output device 22 which is a speaker. When the control section 11 outputs the sound output instruction to the sound processing section 14, the sound processing section 14 outputs a sound signal to the sound output device 22.

The graphic processing section 15 is connected to the display device 23. The display device 23 includes a display screen 24. When the control section 11 outputs the rendering command to the graphic processing section 15, the graphic processing section 15 expands an image to a frame memory (frame buffer) 19 and outputs a video signal for displaying an image on the display screen 24. The graphic processing section 15 executes rendering of one image in units of frames. One frame period of an image is 1/30 second, for example.

The interface section 18 is connected to an input section (controller) 21 and a memory card slot 20. The input information from the input section 21 by the player is stored in the RAM 12, and the control section 11 executes various types of computation based on the input information. Moreover, the interface section 18 performs processing of storing data relating to the game progress status stored in the RAM 12 in a memory card 27 and processing of reading the data stored in the memory card 27 and transmitting the data to the RAM 12 in accordance with the instruction from the control section 11.

The communication interface 17 is connected to the communication network 3 with or without wires and transmits or receives the operator guidance information and the game progress status information to or from the server 2 as necessary. Moreover, the communication interface 17 can also communicate with other game devices 1 by wireless via a communication unit including an antenna 26.

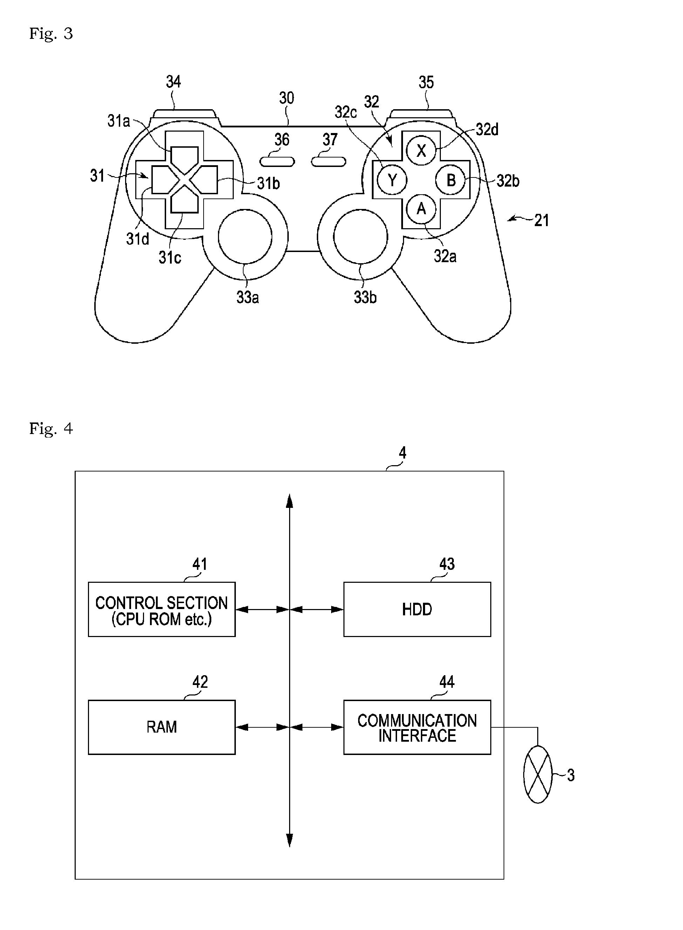

Fig. 3 is an example of a diagram illustrating an example of the input section (controller) 21 provided to the game device according to the embodiment of the present invention. A controller body 30 includes a cross-key 31 on the left side of the front surface thereof and a button group 32 on the right side. The cross-key 31 includes an UP key 31a, a RIGHT key 31b, a DOWN key 31c,and a LEFT key 31d, and the button group 32 includes an A button 32a, a B button 32b, a Y button 32c, and an X button 32d. Moreover, a SELECT button 36 and a START button 37 are provided at the central portion of the input section 21. Furthermore, a plurality of buttons such as an L-button 34 and an R-button 35 are provided on the side portion of the input section 21. Moreover, joysticks 33a and 33b are provided on the bottom-right side of the cross-key 31 and the bottom-left side of the button group 32, respectively.

When a pressing force is applied to these respective buttons, the corresponding switches are turned on. A detection signal corresponding to the ON/OFF of the switch is generated in the input section 21. Moreover, a detection signal corresponding to the tilt direction of the joystick 33 is generated in the input section 21.

The detection signals of the switches generated in the input section 21 are supplied to the interface section 18 and are used as detection information representing which button is turned on. Moreover, in the case of the joystick 33, the detection signals of the joysticks are used as the detection information representing the state of the joystick 33. In this way, the operator guidance input to the input section 21 by the player is supplied to the game device 1.

For example, when the player operates the cross-key 31 and the joystick 33, the player can move a player character within a virtual space, select an action to be executed by the player character, and move the position and direction of a virtual camera. Moreover, when the player presses the button group 32, the player can determine and cancel the action selected with the cross-key 31 or display a predetermined window on the display screen. Moreover, when the player presses the R-button 35 or the L-button 34, the player can input "Good Assessment" or "Bad Assessment," respectively. In this way, it is possible to input assessment information on assessment on the game content with a simple operation just by pressing a button such as the R-button 35 and the L-button 34 without performing a complex operation, particularly, an operation of selecting something.

Fig. 4 is an example of a block diagram illustrating a configuration of a server according to the embodiment of the present invention. The server 2 includes a control section 41, a RAM 42, a HDD 43, and a communication interface 44, which are connected to each other by an internal bus. The control section 41 includes a CPU and ROM, and executes programs stored in the HDD 43 to control the server 2. Moreover, the control section 41 includes an internal timer for measuring time. The RAM 42 is a work area of the control section 41. The HDD 43 is a storage area for storing programs and data. The control section 41 reads programs and data necessary for the progress of a game from the RAM 42 and performs processing of progressing the game based on the operator guidance information received from the game device 1.

The communication interface 44 is connected to the communication network 3 without or with wires and is capable of transmitting and receiving the operator guidance information, the game progress status information, and the assessment information such as "Good Assessment" or "Bad Assessment" to and from the game device 1 as necessary.

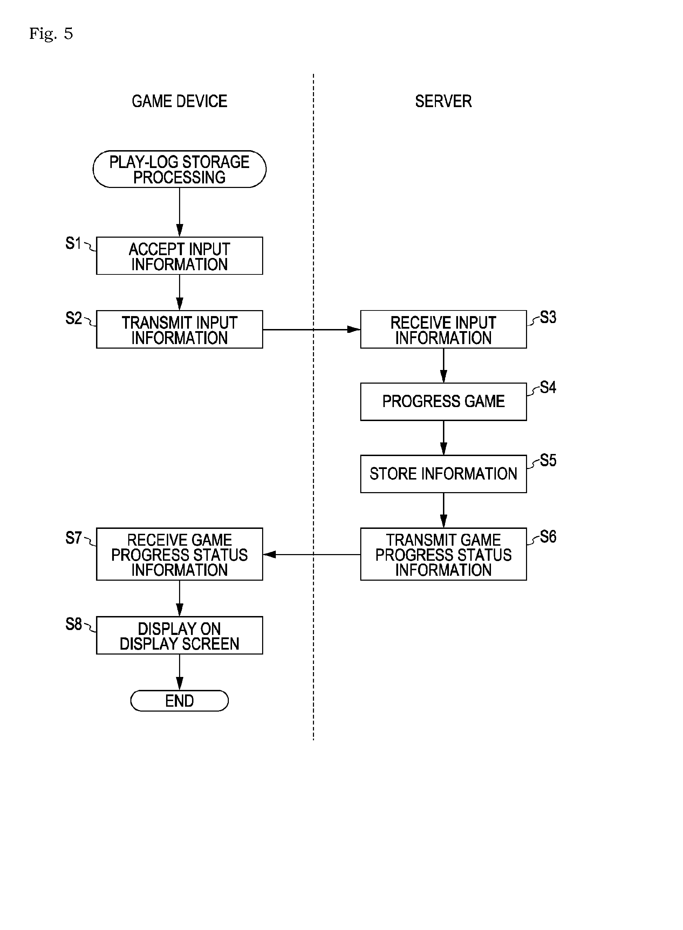

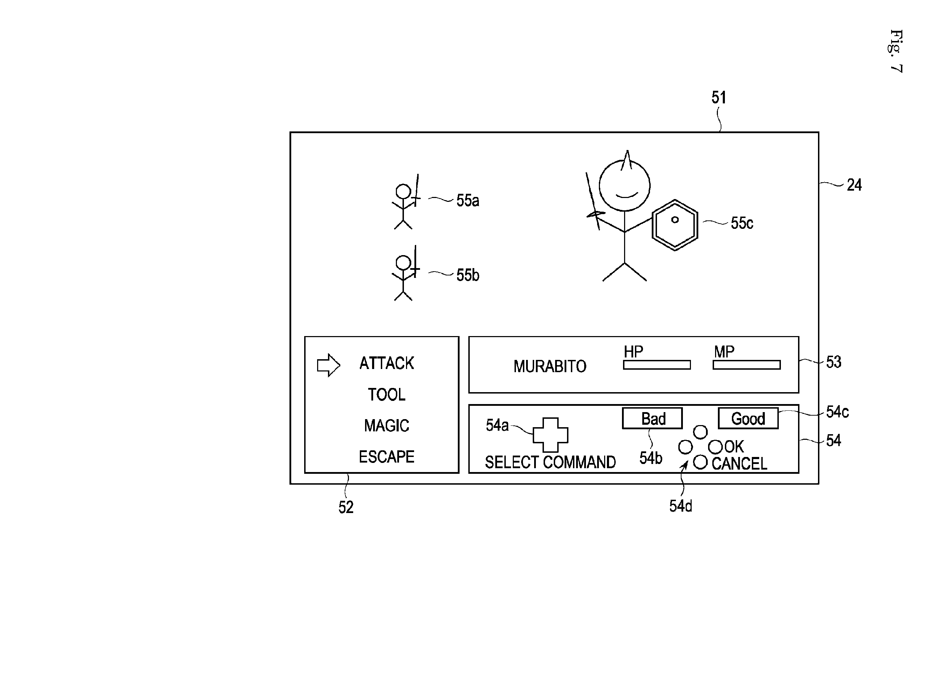

Next, play-log storage processing of storing a play log including the assessment information will be described. Although the present invention can be applied to massively multiplayer online role-playing games (MMORPGs), MORPGs, and other online games, in this example, a case where the present invention is applied to an MMORPG will be mainly described. Fig. 5 is an example of a flowchart of the play-log storage processing according to an embodiment of the present invention. Moreover, Fig. 7 is an example of a diagram illustrating an example of a display screen of the game device according to the embodiment of the present invention.

The game device 1 and the server 2 communicate with each other via the communication network 3, whereby the game progresses. As illustrated in Fig. 7, a game screen display region 51 obtained by perspective transformation of a virtual 3-dimensional space on a virtual screen, an action command display window 52 capable of displaying action commands to be executed by the player character and allowing the player to select an action command with a cursor, a status information display window 53 for displaying the status of the player character, and an input section correspondence display window 54 for displaying the correspondence between the keys/buttons of the input section 21 and the operation result are provided on the display screen 24 of the game device 1 operated by the player. In the game screen display region 51, a player character 55b operated by another player and an enemy character 55c operated by the control section 11 are displayed in addition to the player character 55a operated by the player itself. Moreover, the name "Murabito" of a player character and the remaining physical power and magical power are displayed in the status information display window 53.

The player operates the input section 21 of the game device 1 while viewing the display screen 24. When the player presses the cross-key 31 and the operating button 32, the control section 11 can accept input information including the operator guidance information and the assessment information (step S1). The operator guidance information includes information on the movement of the player character, the action to be performed by the player character, or the change of the position and direction of a virtual camera.

In order to allow the player to input the assessment information for expressing the player's feeling, a cross-key correspondence display 54a, an L-button correspondence display 54b, an R-button correspondence display 54c, and a button group correspondence display 54d are displayed on the input section correspondence display window 54. Moreover, the functions when the cross-key 31, the L-button 34, the R-button 35, and the button group 32 are pressed are described in the input section correspondence display window 54. In this case, "Bad Assessment" is input in the L-button correspondence display 54b when the L-button 34 is pressed. "Good Assessment" is input in the R-button correspondence display 54c when the R-button 35 is pressed.

For example, when the player character has to wander about by moving from field to field in the virtual space before reaching a destination because the terrain is complex, or when the player character has difficult in advancing because a strong enemy character frequently appears in a particular area, the player presses the L-button 34 to input "Bad Assessment." On the other hand, when the player character finds a place with many treasure boxes by moving from field to field in the virtual space, or when the player character finds an enemy character from which a larger experience point necessary for improving the status or the level of the player character can be obtained, the player presses the R-button 35 to input "Good Assessment."

In addition to the above, when the player character performs a virtual combat with a boss character having a stronger offensive power than general enemy characters, and the player character receives serious damage by the attack of the boss character, the player presses the L-button 34 to input "Bad Assessment." On the other hand, when the player character attacks the boss character to cause severe damage to the boss character, or when the player character recovers much of the damage of an ally character using a recovery magic, the player presses the R-button 35 to input the "Good Assessment."

The operator guidance information and the assessment information accepted by the game device 1 are transmitted to the server 2 (step S2), and the server 2 receives the input information input to the game device 1 (step S3). The server 2 receives these information items from a plurality of game devices 1. Subsequently, in the server 2, computation for progressing the game in accordance with a predetermined game program is executed (step S4). For example, the game progresses by allowing the player character to move on the field of a virtual 3-dimensional space and attack an enemy character or use items.

In step S4, when the game progressing processing is executed, the assessment information, the operator guidance information, and the game progress status information are stored in the HDD 13 of the server 2 (step S5). The assessment information and the operator guidance information are stored in correlation with the time when the information was received by the server 2.

When a virtual world is composed of a plurality of stages, and the game progresses while the player character moves between the stages, a stage number for specifying a stage where the player character is present and a positional coordinate of the player character in the stage are stored as the game progress status information. In addition to the above, the positional coordinates of other player characters operated by the other players and the enemy character, actions such as attacks of respective characters and the use of items, the amount of damage or recovery of the player character or the enemy character as the result of the actions of the respective characters, a change of the character status such as an experience point, HP (physical power of the player character), or MP (magical power of the player character), and information on the item acquired or used are recorded.

The game progress status information is also stored in correlation with time. The positional coordinate of the player character can be stored in correlation with the time when the player character was at that positional coordinate. For example, when a certain event occurs, such as when the player character or the enemy character receives damage, recovers, or collapses, when the level of the player character rises, or when the player character acquires a specific item, the time when the event occurred is stored. In this case, the ID of the character having received the damage, the value of the damage, and the time when the damage was received are stored.

Subsequently, the game progress status information is transmitted from the server 2 to the game device 1 (step S6). When the game device 1 receives the game progress status information (step S7), perspective transformation processing is performed on the virtual 3-dimensional space so that the game screen corresponding to the content of the progressed game is displayed on the display screen of the game device 1 (step S8). The series of processing of steps S1 to S8 is repeated for each frame.

In Fig. 5, although a case where the assessment information and the operator guidance information are transmitted in real-time from the game device 1 to the server 2 has been described, since the assessment information does not always need to be transmitted in real-time to the server 2, the assessment information may be stored in the game device 1 and then transmitted to the server 2. In particular, when the communication is congested, only the information necessary for the game device 1 and the server 2 to progress the game synchronously is transmitted and received in real-time, and the assessment information is transmitted when the communication is not congested. In this way, it is possible to prevent the delay of communication speed and the occurrence of communication errors.

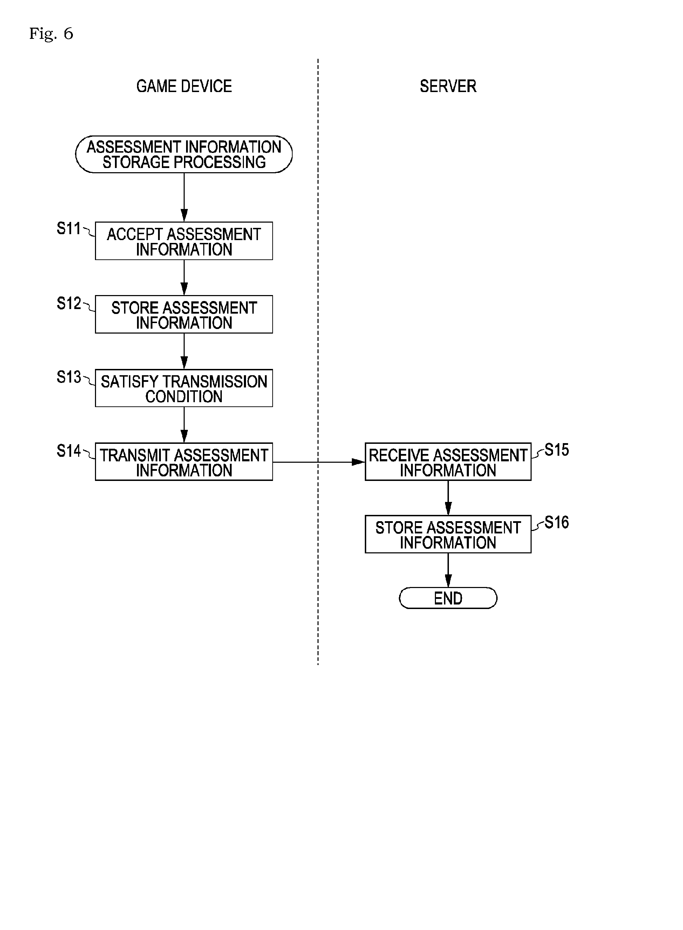

Fig. 6 is an example of a flowchart of assessment information storage processing in an assessment information gathering system when the assessment information is stored in the game device and then transmitted to and stored in the server. First, the game device 1 and the server 2 perform communication through the communication network 3, whereby the game progresses.

The correspondence between the operating buttons and the functions thereof as illustrated in Fig. 7 is displayed on the display screen 24 of the game device 1. When the player operates the R-button 35 or the L-button 34 of the input section 21 of the game device 1, the input of the assessment information of "Good Assessment" or "Bad Assessment" is accepted (step S11), and the assessment information accepted by the game device 1 is stored in the RAM 12 (step S12). In this case, the assessment information is stored in correlation with the time when the input of the information is accepted. The assessment information is stored in the RAM 12 of the game device 1 whenever the assessment information is input. Moreover, when a predetermined transmission condition for transmitting the assessment information to the server 2 is satisfied (step S13), the assessment information and the acceptance time thereof are transmitted from the game device 1 to the server 2 (step S14).

An example of the predetermined condition for transmitting the assessment information to the server 2 in step S13 includes a case where the volume of communication between the game device 1 and the server 2 is a predetermined level or lower. By doing so, only necessary information is transmitted and received, and the occurrence of communication errors when the game device 1 and the server 2 are synchronized can be prevented. In addition to the above, when the field on which the player character can move within the virtual 3-dimensional space is composed of a plurality of areas, the arrival of the player character at the boundary point between two areas may be the predetermined condition. In this case, the assessment information stored in the game device 1 is transmitted to the server 2 when the game data for changing the play area is loaded in the game device 1.

In step S14, when the assessment information is transmitted to the server 2, the server 2 receives the assessment information and the accepted time of the assessment information (step S15), and the assessment information is stored in the HDD 43 (step S16).

As in the case of Fig. 6, even when the assessment information is stored in the game device 1, the predetermined condition is satisfied, so that the assessment information is transmitted to the server 2, the operator guidance information necessary for the game device 1 and the server 2 to progress the game, or the game progress status information is transmitted and received in real-time. In this way, information necessary as the play log is stored in the server 2.

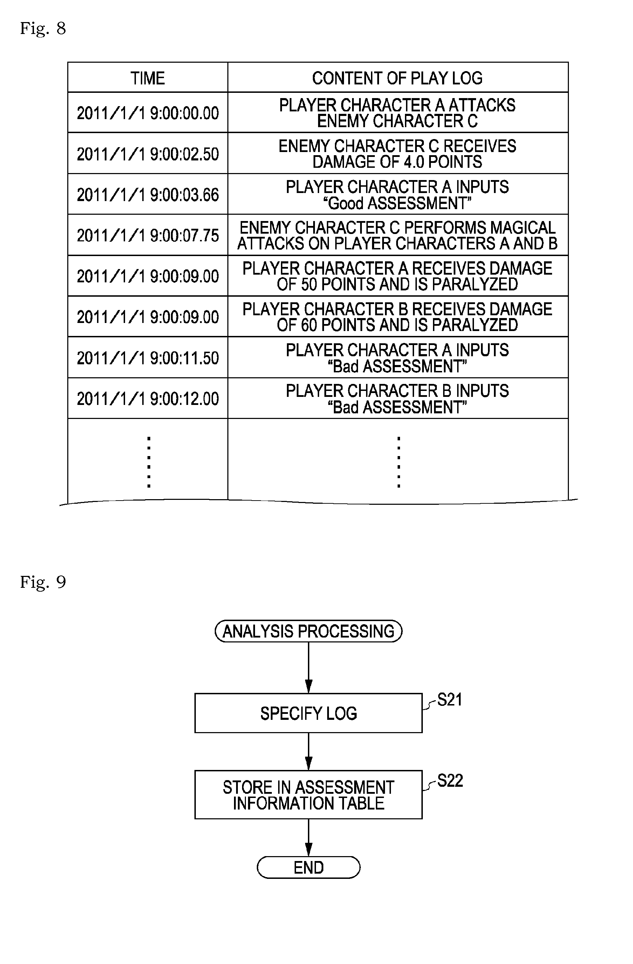

Fig. 8 is an example of a conceptual diagram of a play log according to the embodiment of the invention. The play log is one in which the assessment information and the operator guidance information input by the player and the game progress status information are stored. The assessment information and the operator guidance information are stored in correlation with the time when the assessment information and the operator guidance information are received, and the game progress status information is stored in correlation with the time when a certain event occurs during the progress of the game.

It can be understood from the play log of Fig. 8 that the game progresses as follows. The player character A attacks the enemy character C at 2011-01-01 09:00:00.00 (in the yyyy-mm-dd hh:mm:ss.ss format; the same herein below), and the enemy character C receives damage of 40 points at 09:00:02.50. Moreover, the player 'a' operating the player character A inputs "Good Assessment" at 09:00:03.66. The enemy character C performs a magical attack on the player characters A and B at 09:00:07.75. As a result, the player characters A and B receive damage in their physical points at 09:00:09:00, and fall into a paralyzed state where they may not take an action such as a movement or an attack for a predetermined period. Moreover, the player 'a' operating the player character A inputs "Bad Assessment" at 09:00:11.50, and the player 'b' operating the player character B inputs "Bad Assessment" at 09:00:12.00.

Next, analysis processing of analyzing which one of the assessment information items stored in the server 2 evaluates the content or result of the game, is described below. Fig. 9 is an example of a diagram illustrating the flowchart of the analysis processing in the server according to the embodiment of the invention. When the player inputs assessment information α, a log regarding the game progress status as of the time earlier than the time when the assessment information α was accepted is specified with reference to the play log (step S21).

An example of the information stored as the log regarding the game progress status includes a stage number specifying a stage where the player character is present and the positional coordinate of the player character at that stage. Moreover, the log when a certain event occurred such as when the player character or the enemy character receives damage, recovers, or collapses, when the level of the player character rises, or when the player character acquires a specific item may be stored. Moreover, in the case of a movie (animation) mode in which a predetermined animation is automatically displayed in line with the storyline of the game regardless of the player's operation, the movie number and the play time may be stored as the log regarding the game progress status.

Basically, step S21 specifies the log as of the time immediately before the assessment information α was accepted. However, when an event in which there is a high possibility that "Good Assessment" such as achievement of a quest which is a test provided to the player character or an increase of level is input, immediately after which another event occurs, and immediately after which "Good Assessment" is input, the log regarding an event of high priority such as achievement of a quest or an increase of level is specified.

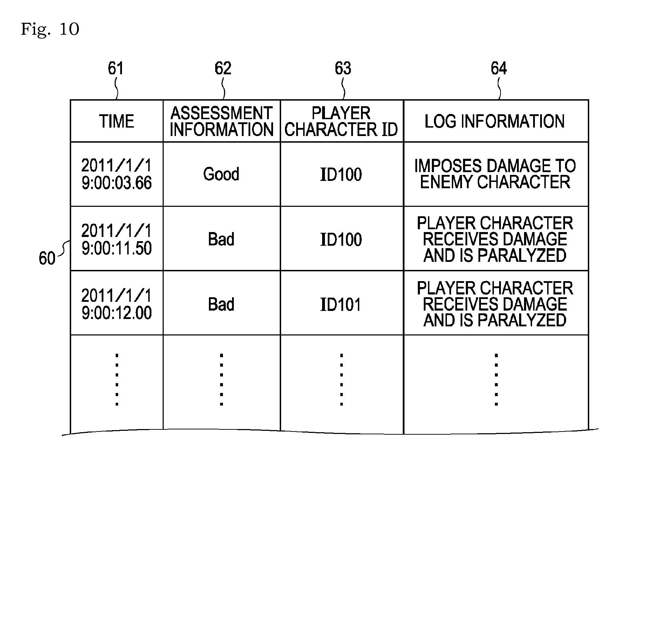

When the log is specified, the assessment information α, the information on the specified log, and the information (player character ID or the like) on the player character who has input the assessment information α are stored in an assessment information table in correlation (step S22). Fig. 10 is an example of an assessment information table according to the embodiment of the invention. In the assessment information table 60, time 61, assessment information 62, player character ID 63, and log information 64 are stored. In the time 61, the time when the assessment information 62 was accepted is stored. In the assessment information 62, either "Good Assessment" or "Bad Assessment" is stored. The player character ID 63 identifies the player character who has input the assessment information.

As the log information 64, the stage number specifying the stage where the player character is present, the positional coordinate of the player character, the enemy character who is performing a virtual combat with the player character, and the like are stored, for example. Moreover, the information on the occurrence of an event that the player character has imposed damage on the enemy character, that the player character has acquired an item, or that the level of the player character has been improved may be stored. Moreover, in the case of a movie (animation) mode in which a predetermined animation is automatically displayed in line with the storyline of the game regardless of the player's operation, the movie number and the play time may be stored as the log information 64.

When the log is specified in step S21, the logs to be extracted may be restricted to only the logs which occurred within a predetermined distance from the position of the player character who has input the assessment information α. The logs occurred at positions separated by a predetermined distance or more from the position of the player character do not naturally express the feeling of the player. Moreover, by restricting to within a predetermined distance, it is possible to reduce the load of the analysis processing.

Alternatively, when a plurality of player characters are playing by setting parties, the logs to be extracted may be restricted to only logs regarding a party to which the player character belongs. In this way, the load of the analysis processing may be reduced.

The information stored in the assessment information table may be aggregated for each piece of operator guidance information. That is, it is possible to specify the number of times when "Good Assessment" or "Bad Assessment" was made for each operator guidance within a predetermined period. By aggregating the number in this way, it is possible to understand which special attack performed on the enemy character by the player character results in an increase of the number of times of "Good Assessment" and which magical attack results in an increase of the number of times of "Bad Assessment."

Moreover, similarly, the information stored in the assessment information table may be aggregated for each piece of game progress status information. That is, it is possible to specify the number of times when "Good Assessment" or "Bad Assessment" was made for each piece of game progress status information within a predetermined period. By aggregating the number in this way, it is possible to understand which stage results in an increase of the number of times of "Good Assessment" or "Bad Assessment," or which virtual combat with the boss character results in an increase in the number of times of "Good Assessment" or "Bad Assessment." In addition to the above, since the number of times of "Good Assessment" is different depending on the type of an item acquired when the player character knocks down the enemy character, it is possible to specify which item has a higher or lower popularity to the players. Moreover, the information stored in the assessment information table may be aggregated for each player character or each player.

Moreover, the player may emphasize the degree of "Good Assessment" or "Bad Assessment" by inputting assessment a plurality of times in the same time. For example, when a player acquires a special item after completing a virtual combat with a boss character, immediately after which the player presses the R-button 35 five times to input "Good Assessment," it represents that the player gives "Rating 5." Thus, when the player presses the R-button 35 five times to give "Rating 5," it represents that the player gives a higher rating than when the player presses the R-button 35 three times to give "Rating 3." As for items, enemy characters, and movie contents having high ratings or content having low ratings, the rankings thereof may be displayed on an official site or the like of the assessment target game. The rankings are periodically updated, and the player can understand content having high or low popularity to other players. Thus, it is possible to attract more interest in the game.

Moreover, when the assessment information is aggregated for each piece of operator guidance information or each piece of game progress status information, the assessment information may be classified for each attribute of the player and then aggregated. Examples of the attribute of the player include a sex, an age, a job, a hobby, and the period of experience in the assessment target game. For example, it can be understood that when the sex of the player is male, the percentage of "Good Assessment" when a magic A is used is higher than when a magic B is used, and that when the sex of the player is female, the percentage of "Good Assessment" when the magic B is used is higher than when the magic A is used.

Moreover, when the assessment information is aggregated for each piece of operator guidance information or each piece of game progress status information, the assessment information may be classified for each attribute of the player character and then aggregated. Examples of the attribute of the player character include a tribe, a job, a level, and an equipped item of the player character. For example, it can be understood that when the job of the player character is "warrior," the percentage of "Good Assessment" when a normal attack is performed is higher than when a special attack A is performed, and that when the job of the player character is "knight," the percentage of "Good Assessment" when the special attack A is performed is higher than when the normal attack is performed.

In the present invention, the player can display the assessment information input when playing the game in the My Page of a social networking service (SNS) or a blog managed by the player. In this case, plug-in software that enables the assessment information to be displayed is set in a setting window or the like of the SNS or the blog (hereinafter referred to as an SNS or the like).

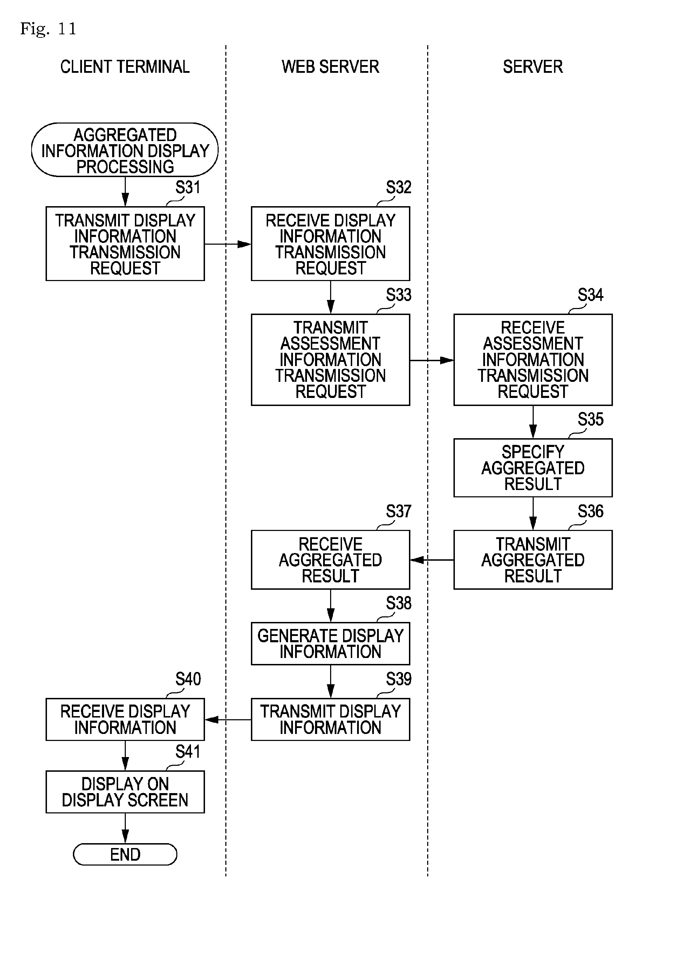

Fig. 11 is an example of a diagram showing the flowchart of aggregated information display processing in an aggregated information display system according to the embodiment of the present invention. A web server described later is connected to the server 2 via the communication network 3, and a client terminal is connected to the web server via the communication network 3.

First, a user who wants to view the page of the SNS or the like of the player accesses, from a client terminal, a web server in which content of the SNS or the like of the player and information on plug-in are aggregated. As a result, when a display information transmission request is transmitted (step S31), the display information transmission request for displaying a web site transmitted from the client terminal is received by the web server (step S32). Subsequently, the assessment information transmission request is transmitted from the web server to the server 2 in which the assessment information is stored in accordance with the set plug-in software (step S33).

The assessment information transmission request includes a player ID (or player character ID), a game ID, and the information on which assessment information is to be transmitted. For example, plug-in software corresponding to the preference of the player may be set in advance so that only "Good Assessment" is to be transmitted, only the assessment information on items is to be transmitted, or only the assessment information on the competition with the boss character is to be transmitted. By doing so, the assessment information which can be displayed on the client terminal of the user who views the SNS or the like can be determined in accordance with the preference of the user.

In step S33, when the assessment information transmission request is transmitted to the server 2, the server 2 receives the assessment information transmission request (step S34). In the server 2, the assessment information gathered from the game device 1 is aggregated for each game and each player, and the aggregated result corresponding to the game ID and the player ID included in the assessment information transmission request is specified (step S35). The specified aggregated result is transmitted to the web server (step S36), and the web server receives the aggregated result (step S37). Subsequently, the web server generates display information for displaying a web page of the SNS or the like including the received aggregated result to the client terminal (step S38), and the generated display information is transmitted to the client terminal (step S39). When the client terminal receives the display information (step S40), the web page of the SNS or the like is displayed on the display screen of the client terminal via a browser (step S41). The aggregated result received from the web server is included in the displayed web page.

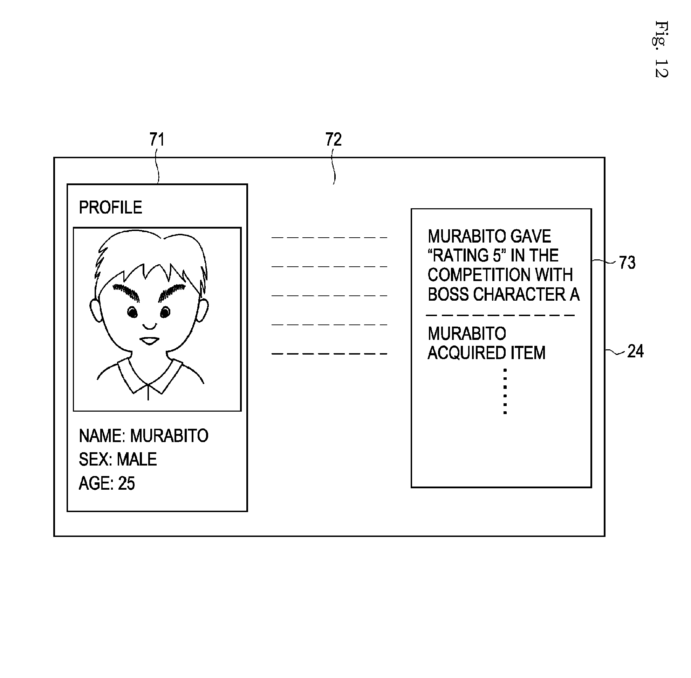

Fig. 12 is an example of a diagram illustrating an example of the My Page of the SNS according to the embodiment of the present invention. For example, when a certain viewer views the SNS or the like managed by the player, as described above in Fig. 11, the aggregated result of the assessment information in an online game, of the player character operated by the player is acquired from the server, and a web page of the SNS or the like is displayed in accordance with the acquired aggregated result. The display screen 24 includes a profile display area 71 for displaying the information on the user (who is also the player of the game) managing the SNS or the like, a content display area 72 for displaying the main contents (for example, a diary or the like) of the SNS or the like, and an aggregated result display area 73 for displaying the aggregated result. For example, when "Murabito" who is the player character competes with the boss character A, when the player presses the R-button 35 to which "Good Assessment" is allocated five times to input "Rating 5," a message, "Murabito gave "Rating 5" in the competition with the boss character A" is displayed in the aggregated result display area 73 of the display screen 24. Thus, the viewer can check the aggregated result.

In step S33, the web server may transmit content information transmission request to the server 2 as well as the assessment information transmission request. Here, the content information is information on the content of the assessment target game corresponding to the assessment information. For example, the content information is information on the game screen obtained by perspective transformation processing of the virtual 3-dimensional space with reference to a virtual camera at a predetermined position in accordance with the game progress status computed based on the operator guidance information or the like input by the respective game devices 1. When receiving the assessment information transmission request and the content information transmission request, the server 2 transmits the assessment information and the content information to the web server. Moreover, the display information for displaying the assessment information and the content information to the client terminal is transmitted to the client terminal. In the client terminal, the assessment information and the content information are displayed on the display screen thereof.

In this case, the reception of the information on the game progress (for example, the operator guidance information and the like) from the game device 1 and the transmission of the information on the game screen obtained in line with the computed game progress status in the server 2 are executed for each frame and controlled synchronously. As a result, in the client terminal, it is possible to view the game screen corresponding to the game progress status displayed on the display screen of the game device 1 in real-time. In the client terminal, by the streaming technologies, information on the game screen is downloaded from the web server, and the game screen is reproduced. As a result, the viewer of the SNS or the like managed by the player can view the progress status of the game operated by the player in real-time and understand the assessment input by the player in real-time. Thus, since the viewer can understand the time when the assessment was input by the user, the viewer can understand whether the assessment of the user is identical to that of the viewer. Thus, it is possible to further increase the variety of the SNS or the like.

In the above embodiment, as illustrated in the flowcharts of the play-log storage processing of Fig. 5 and the assessment information storage processing of Fig. 6, although the assessment information was stored in correlation with time, the content in the game corresponding to the assessment in the assessment information may be specified using the content ID for identifying the game progress status in the game device 1.

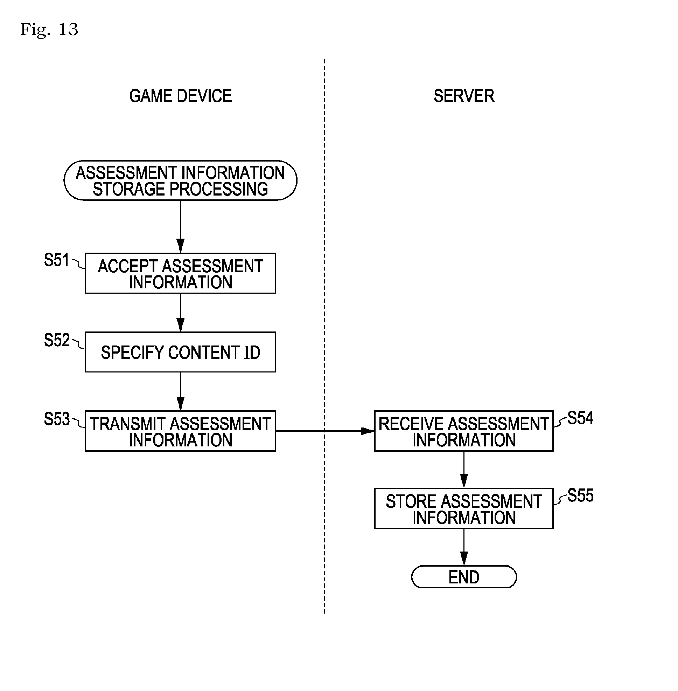

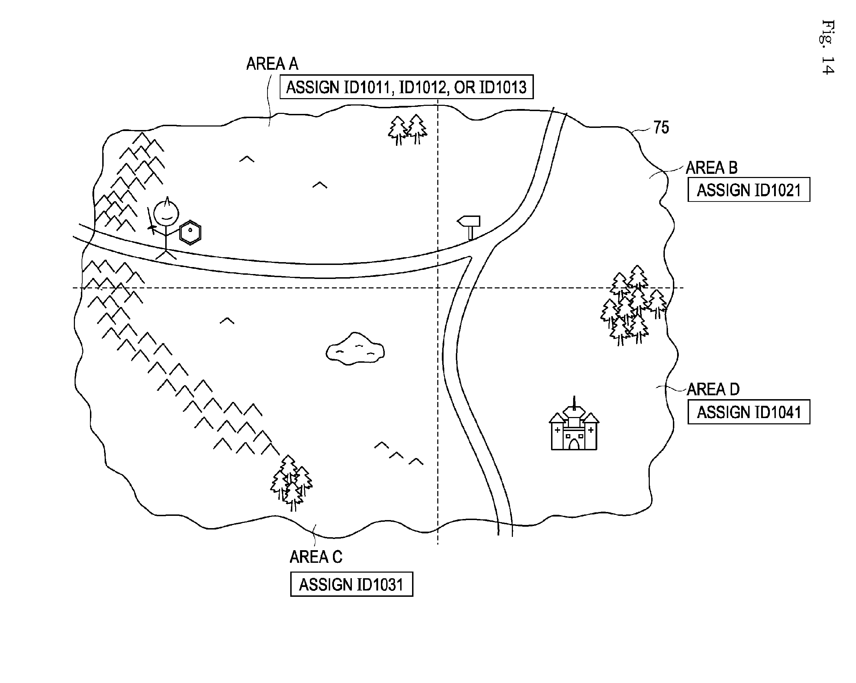

This case will be described below. Fig. 13 is an example of the flowchart of assessment information storage processing according to the embodiment of the present invention. Fig. 14 is an example of the conceptual diagram illustrating the correspondence between a field map within the virtual space in which the player character can move and a game progress status ID described later in the embodiment of the present invention. First, the game device 1 and the server 2 perform communication via the communication network 3, whereby the game progresses. The player presses the R-button 35 or the L-button 34 of the input section 21 of the game device 1, whereby the input of the assessment information of "Good Assessment" or "Bad Assessment" is accepted (step S51).

Subsequently, the content ID corresponding to the accepted assessment information is specified based on the game progress status when the input of the assessment information is accepted (step S52). In the case of a play mode where the game is progressed by the operation of the player, the game progress status ID is specified as the content ID with reference to a game progress status identification table in advance in accordance with the position of the player character within the virtual space, an event such as a virtual combat or a chat with a non-player character, or a game scenario or a quest occurring by the selection of the player.

As illustrated in Fig. 14, a field map 75 is divided into areas A to D, and a game progress status ID corresponding to each area is determined in advance. Moreover, different game progress status IDs may be set to the area A depending on whether a specific event such as a virtual combat with the boss character 76 has occurred or not.

For example, in Fig. 14, a game progress status ID of ID 1011 is set to the area A before the virtual combat with the boss character 76 starts, a game progress status ID of ID 1012 is set to the area A when the virtual combat with the boss character 76 is being made, and a game progress status ID of ID 1013 is set to the area A after the virtual combat with the boss character 76 ends. The game progress status ID correlated with the assessment information is determined depending on the time when the player presses the L-button 34 or the R-button 35. Moreover, ID1021, ID 1031, and ID 1041 are set to the areas B to D, respectively.

Moreover, in the case of a movie mode in which a predetermined animation is automatically displayed in line with the storyline of the game regardless of the player's operation, when the assessment information is input, a movie ID is specified as the content ID in step S52. The movie ID is set in advance for each movie, and the movie ID is specified in accordance with a movie reproduced when the assessment information was accepted. Moreover, one movie may be divided into a plurality of parts in accordance with the reproduction time, and different movie IDs may be provided to respective parts. In this case, the movie ID is specified depending on the time when the assessment information was input during the reproduction of the movie. Thus, it is possible to understand which part of the movie has high rating or low rating.

The content ID specified in step S52 is correlated with the assessment information, and the content ID and the assessment information are transmitted from the game device 1 to the server 2 (step S53). When the assessment information is transmitted to the server 2 in step S53, the server 2 receives the assessment information and the content ID (step S54), and the assessment information and the content ID are stored in the HDD 43 in correlation (step S55). The assessment information and the content ID stored in the server 2 are aggregated for each content ID or each player and are utilized as necessary.

In the above embodiment, although a case where the present invention is applied to the MMORPG has been described mainly, the present invention can be applied to other online games such as an action game, a shooting game, or a simulation game as well as the RPG. Moreover, the present invention can be applied to a multiplayer online game (MO).

In the case of MMO, when the assessment information is transmitted from the game device to the server together with the ID of the player who has input the assessment information or the player character ID (if necessary, the time when the assessment information was input), the assessment information, the IDs, and the time are stored in the server in correlation. Thus, it is possible to correlate the assessment information with the information on the operator guidance of the player and the game progress status information (that is, it is possible to specify the target of the assessment). In the case of MO, the information on the operator guidance of the player, the player character, and the progress information of the game such as the positional coordinate of the competing character, an action, or the result thereof are stored in the game device in addition to the time when the assessment information was input, and these information items are transmitted separately to the server. Moreover, these information items are stored in correlation with the player ID or the player character ID. In this way, it is possible to aggregate the assessment information.

In the above embodiment, although a case where the assessment information input to the game device by the player is gathered has been described mainly, assessment such as "Good Assessment" or "Bad Assessment" may be input when the user watches content such as a film or music using a content reproducing device (for example, a CD player or a DVD player). In this case, the assessment information may be input using remote controllers associated with these content reproducing devices. When the assessment on the film or the music is input, the content ID for specifying the content such as the film or the music that is reproduced and the assessment information is stored in the content reproducing device in correlation. Moreover, the reproduction time of the content when the assessment information was input may be stored in correlation with the assessment information as necessary. Moreover, these information items stored in the content reproducing device are transmitted to the server via the communication network, whereby the assessment information is gathered.

The assessment information gathered in the server can be viewed on the client terminal via the web server in which the page of the SNS or the like managed by the user are uploaded by the same method as described above. Moreover, the content information (audio data and video data of the music, the film, or the like) as well as the assessment information may be transmitted from the server to the web server, and the assessment information and the content information may be viewed on the client terminal. In this case, the reception of the assessment information and the content information from the content reproducing device in the server and the transmission of these information items in the web server are controlled synchronously. In this way, the client terminal can view the assessment information and the content information in real-time. That is, when the user is listening or watching music or a film using the content reproducing device, the viewer can view the music and the film in pace with the progress of the user's watching using the client terminal. Moreover, since the viewer can understand the time when the assessment was input by the user, the viewer can understand whether the assessment of the user is identical to that of the viewer. Thus, it is possible to further increase the variety of the SNS or the like.

## Claims

1. An assessment information gathering system which comprises a content reproducing device including an input device, and a server connectable to the content reproducing device via a communication network, and which gathers assessment information on assessment on content when reproducing content, wherein:
the content reproducing device includes
an assessment information receptor that accepts assessment information on assessment on content under reproduction in accordance with an input operation on the input device, of a user, and
an information transmitter that transmits the assessment information accepted by the assessment information receptor and content information on content under reproduction at the time of accepting the assessment information to the server, and
the server includes
an information receiver that receives the assessment information and the content information from the content reproducing device, and
an information storage that stores the assessment information and the content information received by the information receiver in correlation.

2. The assessment information gathering system according to claim 1,
wherein the server transmits the assessment information and the content information to a web server in correlation based on the information stored in the information storage.

3. The assessment information gathering system according to claim 2,
wherein the server includes a synchronization controller that controls so that the reception of the information by the information receiver and the transmission of the information to the web server by the information transmitter are performed synchronously.

4. An assessment information gathering system which includes a game device including an input device and a server connectable to the game device via a communication network, and which gathers assessment information on assessment on the content of a game in a networked game where the game progresses in accordance with an input operation on the input device, of a player, wherein:
the game device includes
an assessment information receptor that accepts the assessment information on the assessment on the content of the game by the player in accordance with the input operation on the input device, of the player,
an operator guidance information receptor that accepts operator guidance information on an operator guidance for progressing the game in accordance with the input operation on the input device, of the player, and
an information transmitter that transmits the assessment information and the operator guidance information to the server, and
the server includes
an information receiver that receives the assessment information and the operator guidance information from the game device,
a game progressor that progresses the game based on the operator guidance information received by the information receiver, and
an information storage that stores the assessment information received by the information receiver in correlation with the operator guidance information and/or game progress status information on a progress status of the game progressed by the game progressor.

5. The assessment information gathering system according to claim 4,
wherein the server includes
an assessment information storage that stores the assessment information and assessment information received time when the assessment information is received by the server in correlation, and
an operator guidance information storage that stores the operator guidance information and operator guidance information received time when the operator guidance information is received by the server in correlation, and
wherein the information storage stores the assessment information corresponding to the assessment information received time based on the assessment information received time and the operator guidance information received time in correlation with the operator guidance information corresponding to the operator guidance information received time.

6. The assessment information gathering system according to claim 4,
wherein the server includes
the assessment information storage that stores the assessment information in correlation with the assessment information received time when the assessment information is received by the server, and
a game progress status information storage that stores the game progress status information in correlation with time corresponding to a game progress status, and
wherein the information storage stores the assessment information corresponding to the assessment information received time based on the assessment information received time and the time in correlation with the game progress status information corresponding to the time.

7. The assessment information gathering system according to any one of claims 4 to 6,
wherein the input device includes a plurality of operating buttons, and the input operation of the assessment information by the assessment information receptor is executed by pressing of one of the operating buttons.

8. The assessment information gathering system according to any one of claims 4 to 7,
wherein the server includes
an assessment information classifier that classifies the assessment information stored in the information storage in accordance with the content of the correlated operator guidance information and/or the correlated game progress status information, and
an assessment information aggregator that aggregates the number of classified assessment information for each piece of operator guidance information and/or each piece of game progress status information.

9. The assessment information gathering system according to claim 8,
wherein the server includes
an attribute storage that stores player attribute information on an attribute of the player and/or player-character attribute information on a player character operated by the player, and
wherein the assessment information aggregator aggregates the assessment information for each piece of player attribute information and/or each piece of player-character attribute information stored in the attribute storage.

10. A server which is connected to a game device including an input device via a communication network, and which gathers assessment information on assessment on the content of a game in a networked game in which the game progresses in accordance with an input operation on the input device, of a player, comprising:
an assessment information receptor that accepts the assessment information on the assessment on the content of the game by the player, input to the game device in accordance with the input operation on the input device, of the player;
an operator guidance information receiver that receives operator guidance information on an operator guidance for progressing the game, input to the game device in accordance with the input operation on the input device, of the player from the game device;
a game progressor that progresses the game based on the operator guidance information received by the operator guidance information receiver; and
an information storage that stores the assessment information received by the assessment information receptor in correlation with the operator guidance information and/or game progress status information on a progress status of the game progressed by the game progressor.

11. An aggregated result display system comprising:
a game device including an input device;
a server which is connected to the game device via a communication network, and which gathers assessment information on assessment on the content of a game in a networked game in which the game progresses in accordance with an input operation on the input device, of a player and aggregates the assessment information for each player;
a web server which is connected to the server via the communication network, and which receives an aggregated result of the assessment information from the server; and
a client terminal which is connected to the web server via the communication network, which can access the web server to display a predetermined website, and which includes a display device, wherein:
the game device includes
an assessment information receptor that accepts the assessment information on the assessment on the content of the game by the player in accordance with the input operation on the input device, of the player,
an operator guidance information receptor that accepts operator guidance information on an operator guidance for progressing the game in accordance with the input operation on the input device, of the player, and
an information transmitter that transmits the assessment information and the operator guidance information to the server,
the server includes
an information receiver that receives the assessment information and the operator guidance information from the game device,
a game progressor that progresses the game based on the operator guidance information received by the information receiver,
an information storage that stores the assessment information received by the information receiver in correlation with the operator guidance information and/or game progress status information on a progress status of the game progressed by the game progressor,
an assessment information classifier that classifies the assessment information stored in the information storage in accordance with the content of the correlated operator guidance information and/or the correlated game progress status information,
an assessment information aggregator that aggregates the number of classified assessment information for each player and each piece of operator guidance information and/or each piece of game progress status information,
a player identification information receiver that receives player identification information from a web server,
an aggregated result specifier that specifies an aggregated result by the assessment information aggregator in relation to the player identified by the player identification information received by the player identification information receiver, and
an aggregated result transmitter that transmits the aggregated result specified by the aggregated result specifier to the web server,
the client terminal includes
a requestor to send that requests transmission of display information to the web server,
a display information receiver that receives the display information from the web server, and
a website displayer that displays a website on a display screen based on the display information received by the display information receiver, and
the web server includes
a request to send receptor that accepts the request to transmit the display information from the client terminal,
a player identification information transmitter that transmits information for identifying a player, of which the aggregated result of the assessment information is to be displayed, in accordance with a prescribed program when the request to send receptor accepts the request to transmit the display information to the web server from the client terminal,
an aggregated result receiver that receives the aggregated result from the server,
a display information generator that generates the display information to be transmitted to the client terminal based on the aggregated result received by the aggregated result receiver, and
a transmitter that transmits the display information generated by the display information generator to the client terminal.
